# EUROPÄISCHE PATENTANMELDUNG

(11) **EP 2 228 893 A2**
(43) Veröffentlichungstag der Anmeldung: **15.09.2010**
(21) Anmeldenummer: 10002607.9
(22) Anmeldetag: 12.03.2010
(51) Int. Cl.: H02M 1/36, G05F 1/10

(54) **Photovoltaikanlage mit einer Ladevorrichtung für die Eingangskapazität des Wechselrichters**

(30) Priorität: 12.03.2009 DE 102009012928
(71) Anmelder: Kostal Industrie Elektrik GmbH, 58513 Lüdenscheid (DE)
(72) Erfinder: Röttger, Dieter, 58730 Fröndenberg (DE); Haardt, Mirko, 57234 Wilnsdorf (DE)
(74) Vertreter: Kerkmann, Detlef

(57) **Zusammenfassung**

Energiewandleranlage, an die eingangsseitig ein Photovoltaik-Generator (1) anschließbar ist, welcher über eine steuerbare Schaltvorrichtung (3) mit einem Wechselrichter (9) verbindbar ist, wobei beim Einschalten des Wechselrichters oder beim Verbinden des Photovoltaik-Generators mit den Eingangsanschlüssen (11) eine Steuervorrichtung (7) die Schaltvorrichtung öffnet oder geöffnet hält,
- den Spannungswert am Photovoltaik-Generator und den Spannungswert (U_{DC}) an der Eingangskapazität (4) des Wechselrichters erfasst und
- eine Ladeschaltung ansteuert, welche die Eingangskapazität des Wechselrichters auf einen Spannungswert auflädt, der dem am Photovoltaik-Generator anliegenden Spannungswert entspricht, und
- nach Angleichung der Spannungswerte die Schaltvorrichtung durch Ansteuerung einschaltet.

## Beschreibung

Die vorliegende Erfindung betrifft eine Energiewandleranlage, an die eingangsseitig ein Photovoltaik-Generator anschließbar ist, welcher über eine steuerbare Schaltvorrichtung mit einem Wechselrichter verbindbar ist.

Ein Photovoltaik-Generator besteht üblicherweise aus mehreren Solarzellenmodulen, die miteinander in Reihe zu so genannten Strings verschaltet sind. Die Strings liefern eine Gleichspannung, die nach einer Anpassung der Spannungshöhe durch einen Schaltwandler, mittels einer Brückenschaltung in eine Wechselspannung umgesetzt wird. Die aus zumindest dem Schaltwandler und der Brückenschaltung bestehende Schaltungsanordnung wird hier kurz als Wechselrichter bezeichnet. Die vom Wechselrichter abgegebene Wechselspannung kann beispielsweise in das Netz eines lokalen Energieversorgers eingespeist werden.

Photovoltaik-Generatoren führen teilweise recht hohe Gleichspannungen. Bei Berührung von spannungsführenden Teilen besteht unmittelbar eine Gefahr für Personen, die z. B. Wartungsarbeiten an der Anlage ausführen. Aus diesem Grunde schreibt die Norm VDE 0100 Teil 712 in ihrer neuesten Fassung eine Gleichspannungs-Trennstelle zwischen dem Photovoltaik-Generator und dem Wechselrichter vor.
Gleichspannungs-Trennstellen können elektromechanisch oder elektronisch ausgeführt sein. Die nicht vorveröffentliche deutsche Patentanmeldung DE 10 2007 043 512 beschreibt eine Möglichkeit, eine Gleichspannungs-Trennstelle elektronisch auszuführen. Andere Ausführungen sind in der DE 102 25 259 B3 sowie in der DE 10 2005 061 532 B4 beschrieben. Die diesen Patenten zugrunde liegenden Erfindungen beschäftigen sich insbesondere mit der Problematik von induktiven Spannungsspitzen, die beim Ausschalten auftreten können.

Ein Problem, welches in den bekannten Dokumenten nicht behandelt wird, sind Stromspitzen, die sich beim Anschalten von Photovoltaik-Generatoren an den Wechselrichter durch kapazitive Lasten ergeben.

Ein Wechselrichtereingang besitzt zumeist eine nicht zu vernachlässigende Eingangskapazität und einen niedrigen Reihenwiderstand. Je nach Generatortyp besitzt ein Photovoltaik-Generator eine parallele Kapazität von 1 µF und mehr. Speziell Dünnschicht-Generatoren weisen derart hohe Kapazitäten auf. Die Kapazität am Photovoltaik-Generator ist oftmals mit einer hohen Spannung aufgeladen. Dagegen ist der Eingangskapazität des Wechselrichters vor dem Anschalten des Photovoltaik-Generators in der Regel vollständig entladen.

Schaltet man nun den Photovoltaik-Generator an den Wechselrichter an, so entstehen hohe Umlade- oder auch Kurzschlussströme. Je nach Spannung und Photovoltaik-Generatortyp können diese so hoch sein, dass sie die Schaltung altern lassen oder sogar zerstören. Um dieses Problem zu vermeiden, kann eine entsprechend spannungsfeste Dimensionierung von Kontakten und Halbleiterschaltern vorgesehen werden. Diese Möglichkeit ist kostspielig, und ein Verschleiß ist dennoch nicht vollständig zu vermeiden.

Es stellte sich daher die Aufgabe, eine Energiewandleranlage zu schaffen, die die Probleme beim Zusammenschalten von Kapazitäten löst und die einfach und kostengünstig realisierbar ist.

Diese Aufgabe wird erfindungsgemäß dadurch gelöst, dass beim Einschalten des Wechselrichters oder beim Verbinden des Photovoltaik-Generators mit den Eingangsanschlüssen eine Steuervorrichtung
- die Schaltvorrichtung öffnet oder geöffnet hält,
- den Spannungswert am Photovoltaik-Generator und den Spannungswert an der Eingangskapazität des Wechselrichters erfasst und
- eine Ladeschaltung ansteuert, welche die Eingangskapazität des Wechselrichters auf einen Spannungswert auflädt, der dem am Photovoltaik-Generator anliegenden Spannungswert entspricht, und
- nach Angleichung der Spannungswerte die Schaltvorrichtung durch Ansteuerung einschaltet.

Es ist somit eine Ladeschaltung vorgesehen, die die zuzuschaltende Eingangskapazität des Wechselrichters auf zumindest annähernd den Spannungswert der Kapazität des Photovoltaik-Generators vorlädt, so dass beim Verbinden der Kapazitäten keine hohe Ausgleichsströme auftreten können. Der Photovoltaik-Generator kann so problemlos auf den Wechselrichter aufgeschaltet werden.

Vorzugsweise ist die Ladeschaltung so ausgebildet, dass sie aus einem Netzteil besteht und die Eingangskapazität des Wechselrichters aus dem Spannungsnetz heraus auflädt. Eine derartige Ladeschaltung wird mit der Spannung 230 V betrieben und kann die Eingangskapazität auf einen Spannungswert zwischen beispielsweise 0 und 1000 V aufladen. Die Eingangskapazität des Wechselrichters wird allerdings nur solange geladen, bis die Spannung auf der Seite des Photovoltaik-Generators erreicht ist.

Eine weitere Möglichkeit zur Ausführung der Ladeschaltung besteht darin, einen Schaltregler vorzusehen, der mit der Generatorspannung gespeist wird und der die Ladung der Eingangskapazität vornimmt. Allgemein kann als Ladeschaltung eine beliebige Schaltung verwendet werden, die in der Lage ist, die Eingangskapazität des Wechselrichters vor dem Anschalten des Photovoltaik-Generators auf einen ausreichend hohen Spannungswert aufzuladen.

Häufig haben Wechselrichter mehrere Eingangskanäle, die mit unterschiedlichen Generatorteilen, den so genannten "Strings" beschaltet sind. Um die Spannungen der Eingangskapazitäten mehrerer Eingangskanäle gleichzeitig anzupassen, lädt die Ladeschaltung die Eingangskapazitäten des Hochsetzstellers über ein Diodennetzwerk auf. Die Dioden entkoppeln dabei die Eingangskapazitäten der verschiedenen Eingangskanäle voneinander, so dass diese auf unterschiedliche Spannungswerte aufgeladen werden können.

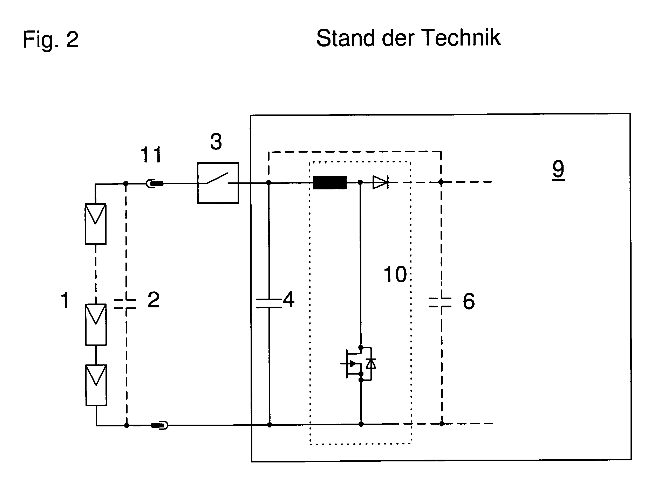

Die Figur 2 skizziert Teile einer Energiewandleranlage nach dem Stand der Technik. Anhand dieser Figur soll zunächst das der Erfindung zugrunde liegende Problem verdeutlicht werden. Parallel zu einem Photovoltaik-Generator 1, bestehend aus einer Reihenschaltung mehrerer Solarzellenmodule, ist eine Generatorkapazität 2 angedeutet, welche die parasitäre interne Kapazität des Photovoltaik-Generators 1 darstellt. Des weiteren ist der Eingang eines Wechselrichters 9 dargestellt, der eine Eingangskapazität 4 aufweist. Diese Eingangskapazität 4 wird im wesentlichen durch einen zum Eingang des Wechselrichters 9 parallel liegenden Kondensator bestimmt. Daneben können noch weitere kapazitive Bauelemente einen Beitrag leisten, welche hier durch eine Ersatzkapazität 6 symbolisiert sind, und die über die Wechselrichterelektronik 10, die hier ebenfalls nur symbolisch dargestellt ist, angeschaltet sind. Das Bezugszeichen 3 bezeichnet eine Schaltvorrichtung, durch die der Photovoltaik-Generators 1 mit dem Wechselrichter 9 verbunden bzw. von dem Wechselrichter 9 getrennt werden kann.

Sind die internen Kapazitäten (4, 6) des Wechselrichters 9 auf ein anderes Spannungsniveau aufgeladen als die Generatorkapazität 2, so fließt beim Einschalten der Schaltvorrichtung 3 (bzw. beim Anschließen des Photovoltaik-Generators 1 an die Eingangsanschlüsse 11 des Wechselrichters, je nach dem welcher Vorgang zuletzt erfolgt) ein relativ hoher Ausgleichstrom zwischen diesen Kapazitäten (2 und 4 bzw. 6), welcher Schäden an der Schaltvorrichtung 3, an der Wechselrichterelektronik 10 oder an den Eingangsanschlüssen 11 verursachen kann.

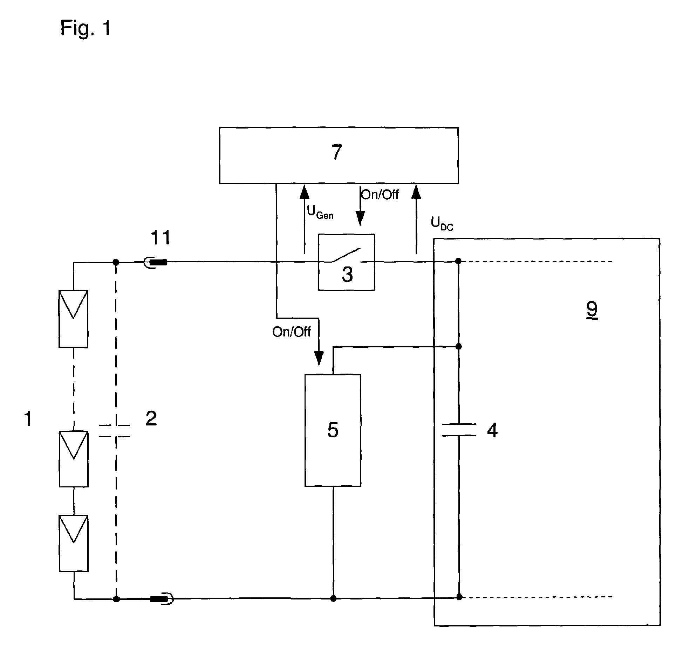

Die Figur 1 zeigt ein schematisches Blockschaltbild einer erfindungsgemäß aufgebauten Energiewandleranlage. Dargestellt sind nur die zu Erläuterung der Erfindung wesentlichen Komponenten, darunter die Generatorkapazität 2, die Eingangskapazität 4 des Wechselrichters 9 und die Schaltvorrichtung 3.

Außerdem ist eine Steuervorrichtung 7 vorgesehen, welche erstens die Schaltvorrichtung 3 und zweitens eine Ladeschaltung 5 ansteuert. Darüber hinaus erfasst die Steuervorrichtung 7 den Spannungswert U_{Gen} am Photovoltaik-Generator 1 sowie den Spannungswert U_{DC} an der Eingangskapazität 4 des Wechselrichters 9.

Beim Einschalten des Wechselrichters 9 oder beim Verbinden des Photovoltaik-Generators 1 mit dem Wechselrichter öffnet die Steuervorrichtung 7 die Schaltvorrichtung 3 beziehungsweise hält diese geöffnet, falls sie bereits geöffnet ist. Nach der Erfassung der Spannungswerte U_{Gen} und U_{DC} steuert die Steuervorrichtung 7 die Ladeschaltung 5 an, welche die Eingangskapazität 4 des Wechselrichters 9 auflädt, bis der Spannungswert U_{DC} an der Eingangskapazität 4 genau oder zumindest annähernd genau dem Spannungswert U_{Gen} am Photovoltaik-Generator 1 entspricht. Nach Angleichung der beiden Spannungswerte (U_{DC}, U_{Gen}) steuert die Steuervorrichtung 7 die Schaltvorrichtung 3 an, welche daraufhin die Verbindung zwischen dem Photovoltaik-Generator 1 dem Wechselrichter 9 herstellt.

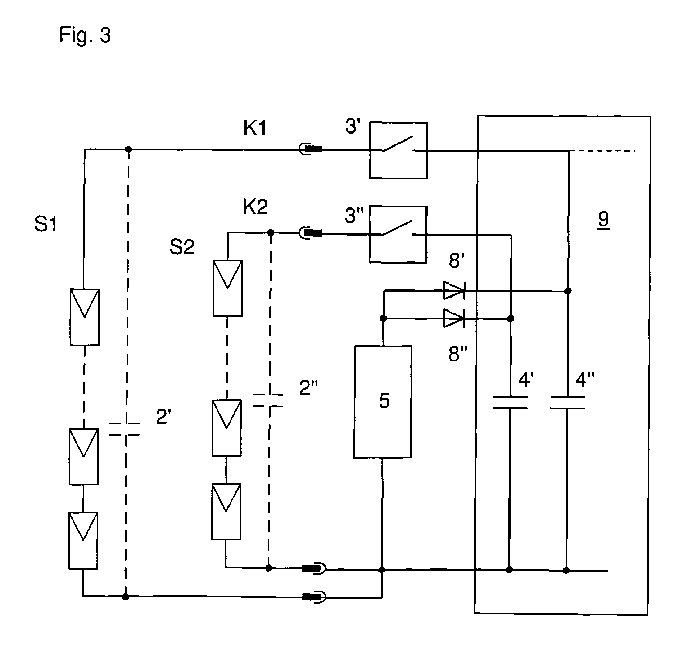

Die Figur 3 skizziert eine Schaltungsvariante einer erfindungsgemäßen Energiewandleranlage, die mehrere Eingangskanäle (K1, K2) aufweist, die jeweils mit einem String (S1, S2) eines Photovoltaikgenerators verbunden sind. Dargestellt sind zudem deren Generatorkapazitäten (2', 2"). Jeder Eingangskanal (K1, K2) weist eine eigene Schaltvorrichtung (3', 3") und eine eigene Eingangskapazität (4', 4") auf. Eine hier nicht dargestellte Steuerschaltung erfasst hier entsprechend die Spannungswerte an allen Generatorkapazitäten (2', 2") sowie an allen Eingangskapazitäten (4', 4").

Der Ausgleich der Spannungswerte in den Eingangskanälen (K1, K2) erfolgt mit einer einzigen Ladeschaltung 5, was dadurch erreicht wird, dass die Verbindung zwischen der Ladeschaltung 5 und den Eingangskapazitäten (4', 4") über jeweils eine Entkopplungsdiode (8', 8") erfolgt. Die Ladeschaltung 5 pumpt dann die Eingangskapazitäten (4', 4") aller Eingangskanäle (K1, K2) bis zur höchsten Wert der von den Photovoltaik-Strings gelieferten Spannungen auf. Der Eingangskanal (K1 bzw. K2) mit dem höchsten Spannungswert wird durch Ansteuerung der zugehörigen Schaltvorrichtung (3' bzw. 3") zuerst zugeschaltet. Beim Abfallen der Spannungswerte werden dann nacheinander die weiteren Eingangskanäle (K2 bzw. K1) zugeschaltet, wenn die Spannungen vor und hinter den Schaltvorrichtungen (3', 3") den gleichen Wert erreichen.

### Bezugszeichen

- 1: Photovoltaik-Generator
- 2, 2', 2": Generatorkapazität(en)
- 3, 3', 3": Schaltvorrichtung(en)
- 4, 4', 4": Eingangskapazität(en) (des Wechselrichters)
- 5: Ladeschaltung
- 6: Ersatzkapazität
- 7: Steuervorrichtung
- 8, 8', 8": (Entkopplungs)dioden
- 9: Wechselrichter
- 10: Wechselrichterelektronik
- 11: Eingangsanschlüsse

- K1, K2: Eingangskanäle
- S1, S2: Strings
- U_{Gen}: Wert der Spannung am Photovoltaik-Generator
- U_{DC}: Wert der Spannung am Wechselrichter

## Patentansprüche

1. Energiewandleranlage,
an die eingangsseitig ein Photovoltaik-Generator anschließbar ist, welcher über eine steuerbare Schaltvorrichtung mit einem Wechselrichter verbindbar ist,
**dadurch gekennzeichnet,**
**dass** beim Einschalten des Wechselrichters (9) oder beim Verbinden des Photovoltaik-Generators (1) mit den Eingangsanschlüssen (11) eine Steuervorrichtung (7)
- die Schaltvorrichtung (3, 3', 3") öffnet oder geöffnet hält,
- den Spannungswert (U_{Gen}) am Photovoltaik-Generator (1) und den Spannungswert (U_{DC}) an der Eingangskapazität (4, 4', 4") des Wechselrichters (9) erfasst und
- eine Ladeschaltung (5) ansteuert, welche die Eingangskapazität (4, 4', 4") des Wechselrichters (9) auf einen Spannungswert (U_{DC}) auflädt, der dem am Photovoltaik-Generator (1) anliegenden Spannungswert (U_{Gen}) entspricht, und
- nach Angleichung der Spannungswerte (U_{Gen}. U_{DC}) die Schaltvorrichtung (3, 3', 3") durch Ansteuerung einschaltet.

2. Energiewandleranlage nach Anspruch 1, **dadurch gekennzeichnet, dass** der Wechselrichter (9) mehrere Eingangskanäle (K1, K2) aufweist, die mit jeweils einem Teil (S1, S2) des Photovoltaik-Generators (1) verbunden sind.

3. Energiewandleranlage nach Anspruch 2, **dadurch gekennzeichnet, dass** mehrere Eingangskapazitäten (4', 4") der Eingangskanäle (K1, K2) durch eine einzige Ladeschaltung (5) vorgeladen werden.

4. Energiewandleranlage nach Anspruch 3, **dadurch gekennzeichnet, dass** die Eingangskapazitäten (4', 4") über Entkopplungsdioden (8', 8") mit dem Ausgang der Ladeschaltung (5) verbunden sind.

5. Energiewandleranlage nach Anspruch 1, **dadurch gekennzeichnet, dass** die Ladeschaltung (5) als ein Netzteil ausgebildet ist, welches aus dem öffentlichen Spannungsnetz gespeist werden kann.

6. Energiewandleranlage nach Anspruch 1, **dadurch gekennzeichnet, dass** die Ladeschaltung (5) als ein Schaltregler ausgebildet ist, der durch die Generatorspannung des Photovoltaik-Generators (1) gespeist wird.
